# EUROPÄISCHE PATENTSCHRIFT

(11) **EP 0 997 712 B1**
(45) Veröffentlichungstag und Bekanntmachung des Hinweises auf die Patenterteilung: **22.03.2006**
(21) Anmeldenummer: 99121294.5
(22) Anmeldetag: 26.10.1999
(51) Int. Cl.: G01F 23/26

(54) **Kapazitive Sensoranordnung zur Verwendung in einem flüssigen Medium sowie Herstellungsverfahren und Verwendung**
Capacitive fluid sensing device, manufacturing method and use
Dispositif détecteur capacitif de fluide, méthode de fabrication et utilisation

(30) Priorität: 31.10.1998 DE 19850245
(43) Veröffentlichungstag der Anmeldung: 03.05.2000
(73) Patentinhaber: Conti Temic microelectronic GmbH, 90411 Nürnberg (DE)
(72) Erfinder: Milli, Walter, 73274 Notzingen (DE)

(56) Entgegenhaltungen:
- EP-A- 0 401 111
- FR-A- 2 752 053
- US-A- 3 952 593
- US-A- 4 589 077
- US-A- 5 142 909
- US-A- 5 437 184

## Beschreibung

Die Erfindung betrifft eine kapazitive Sensoranordnung in einem flüssigen oder gasförmigen Medium, welches als Dielektrikum auf die kapazitive Sensoranordnung wirkt, sowie ein Verfahren zur Herstellung dieser Sensoranordnung. Derartige Sensoranordnungen werden insbesondere zur Füllstandsmessung eingesetzt, wobei grundsätzlich auch andere Parameter aus den dielektrischen Eigenschaften des Mediums abgeleitet werden können.

Neben Röhrenkondensatoranordnungen sind auch plattenförmige kapazitve Sensoranordnungen bekannt. So zeigt beispielsweise die DE 196 44 777 C1 neben einer Beschreibung des allgemeinen Standes der Technik einen Füllstandssensor mit einer Anzahl kapazitiver Sensoren, die gruppenweise zusammengeschaltet sind. Die kapazitiver Sensoren sind übereinander einseitig auf einem Träger angeordnet. Die Auswertung erfolgt quasi digital für jede Gruppe kapazitiver Sensoren, was den Aufwand für die Verdrahtung und den Schaltungsaufbau erhöht.

Aus der deutschen Übersetzung DE 690 01 151 T2 der in Französisch veröffentlichten EP 0 401 111 B1 ist darüber hinaus eine kapazitive Sensoranordnung der gattungsbildenden Art zu entnehmen. Dabei sind auf zueinander gerichteten Seiten zweier benachbarter Trägerplatten jeweils metallische Kondensatorbeläge angeordnet, die durch mehrere Niete miteinander verbunden sind und auf den Nieten jeweils zwischen den Trägerplatten Abstandshalteringe aufgeschoben sind. Die Abstandshalter und die Niete sind dabei zwingend außerhalb der Bereiche der kapazitiven Belegungen vorgesehen und von diesen elektrisch isoliert. Die Montage dieser Anordnung ist aufwendig.

Die Trägerplatten sind aus Leiterplattenmaterial durch Ätzverfahren strukturiert und weisen zum Teil einer Trägerplatte mehrere von einander beabstandete Kondensatorbeläge, bspw. eine Hauptelektrode zur Füllstandsmessung und eine Dielektrizitätsmeßelektrode zur Messung der sich eventuell verändernden Dielektrizität, sowie Schutzbelegungen zur elektrischen Abschirmung auf, wobei diese unterschiedlichen Elemente auf den Trägerplatten durch Leiterbahnen jeweils mit einem Anschlußbereich verbunden sind. Die einzelnen Kortdensatorbeläge auf den Trägerplatten sowie gegebenenfalls die weiteren Elemente werden von diesen Anschlußbereichen auf den einzelnen Trägerplatten aus mit einer hinsichtlich des räumlichen Aufbaus nicht näher gezeigten, offensichtlich separat angeordneten elektronischen Meßeinrichtung verbunden. Die erforderlichen elektrischen Verbindungen für zu den einzelnen Trägerplatten sind störanfällig und aufwendig.

Die Meßgenauigkeit der Anordnung ist zudem stark von der Stabilität und damit von der Anzahl und dem Abstand der Nieten untereinander abhängig. So kann durch die Nieten nicht in jedem Fall sichergestellt werden, daß sich die Trägerplatten nicht doch durchbiegen und so einen nicht konstanten Abstand und damit Meßabweichungen hervorrufen.

Aufgabe der Erfindung ist es, eine kapazitive Sensoranordnung vorzustellen, die einerseits leicht herstellbar ist und andererseits eine genaue Messung gewährleistet, sowie ein entsprechendes Verfahren zur Herstellung anzugeben.

Diese Aufgabe wird durch die kennzeichnenden Merkmale des Patentanspruchs 1, durch das Verfahren nach Anspruch 10 sowie durch die Verwendung gemäß Anspruch 14 gelöst. Grundgedanke der Erfindung ist, daß die an sich bekannte Mehrebenen-Leiterplattentechnik sehr vorteilhaft für kapazitve Sensoranordnungen eingesetzt werden kann, wobei als Abstandshaltemittel zwischen zwei Trägerplatten jeweils eine Zwischenplatte mit einem Hohlraum vorgesehen ist. Dieser Hohlraum wird gebildet durch eine mittlere Aussparung in der Zwischenplatte, die in dem Bereich angeordnet ist, in dem die benachbarten Trägerplatten die Kondensatorbeläge aufweisen. Es ein verbleibt dabei ein Randbereich, der die benachbarten Trägerplatten in dem gewünschten Abstand hält, wobei der Abstand durch die Dicke der Zwischenplatte exakt bestimmt ist. Darüber hinaus sind zum Ein - und Ausströmen des Mediums in und aus dem Hohlraum bzw. zum Druckausgleich weitere Aussparungen seitlich im Randbereich der Zwischenplatte oder aber direkt in den Trägerplatten vorgesehen. Die Träger- und Zwischenplatten sind durch metallisierte Durchkontaktierungen untereinander elektrisch verbunden. Die Sensoranordnung kann im zusammengebauten Zustand als ein hohler Multilayer, also eine Mehrebenen-Leiterplattenanordnung mit Hohlräumen für das zu messende Medium beschrieben werden. Die Randbereiche der Zwischenplatte können eine deutlich bessere Stabilität und damit Meßgenauigkeit gewährleisten.

Ausserdem wird es möglich, die einzelnen Trägerplatten durch die Zwischenplatten hindurch mittels metallisierten Durchkontaktierungen zu verbinden, wofür aus der Mehrebeneleiterplattentechnik bekannte und gut beherrschte Fertigungsprozesse zur Verfügung stehen. Zudem kann die Auswerteschaltung so auf die Aussenseite einer äusseren Trägerplatte integriert werden, so daß eine komplizierte und störanfällige elektrische Verbindung, bspw. durch Bonddrähte völlig vermieden werden kann.

In ganz besonders bevorzugter Weise ergibt sich ein Verfahren zur gleichzeitigen Herstellung einer Vielzahl dieser Sensoranordnungen, indem große Tafeln aus segmentweise strukturiertem Träger- und Zwischenplattenmaterial übereinandergelegt werden, wobei die einzelnen Segmente nachfolgend die einzelnen Sensoranordnungen bilden und durch Streben miteinander verbunden sind, die nach dem Verkleben der Tafeln und vorzugsweise auch nach dem Einbringen der Durchkontaktierungen voneinander getrennt, also an diesen Streben freigeschnitten werden. Die Streben halten zuvor in den Tafeln der Zwischenplatten auch die einzelnen, durch die späteren Strömungsöffnungen unterbrochenen Teile des Randbereichs zusammen. Dieses Verfahren basiert wiederum auf den Erfahrungen der Mehrebenen-Leiterplattentechnik, wobei das Einfügen der Zwischenplatten mit ihren Aussparungen sich in ganz besonderer Weise als geeignet für diesen Prozeß erweist und ohne nennenswerte Veränderung in herkömmlichen Maschinen für Mehrebenen-Leiterplatten vollständig hergestellt werden kann, so daß insbesondere auch eine spätere separate, eventuell gar manuelle Montage entfällt.

Die Erfindung wird nachfolgend anhand eines Ausführungsbeispiels und der Figuren näher erläutert.

Kurze Beschreibung der Figuren:
- Figur 1: Seitenansicht einer kapazitiven Sensoranordnung aus zwei parallelen Kondensatoranordnungen in einem flüssigen oder gasförmigen Medium
- Figur 2: Vorderansicht der kapazitiven Sensoranordnung gemäß Figur 1
- Figur 3: Explosionsdarstellung der Sensoranordnung - die Vorderseiten der einzelnen Ebenen
- Figur 4: Explosionsdarstellung der Sensoranordnung - die Rückseiten der einzelnen Ebenen
- Figur 5: Darstellung des Herstellungsprozesses mit dem Freischneiden der einzelnen Sensoranordnungen, insbesondere der Zwischenplattenaus der Mehrebenenanordnung
- Figur 6: Schnitt durch die Sensoranordnung
- Figur 7: Sensoranordnung in einem Abschirmrohr mit Öffnungen zum Strömen des Mediums
- Figur 8: Explosionsdarstellung einer weiteren Ausgestaltung mit Öffnungen in den äußeren Trägerplatten zum Ein- und Ausströmen des Mediums
- Figur 9: Schnitt durch die Sensoranordnung gemäß Figur 8
- Figur 10: Verdeutlichung der Herstellung in Mehrebenen-Leiterplattentechnik mit Tafeln aus Träger- und Zwischenplattenmaterial, die in identische Segmente unterteilt und über Streben verbunden gleichzeitig strukturiert und nachfolgend entlang der Streben freigeschnitten werden

Die Figuren zeigen besonders bevorzugte Ausführungsbeispiele mit drei parallel zueinander angeordneten Trägerplatten 1, 3 und 5 zwischen denen jeweils eine Zwischenplatte 2 und 4 angeordnet ist und die somit eine Anordnung aus 5 Ebenen bilden. Selbstverständlich sind bspw. auch Sensoranordnungen mit nur zwei Platten möglich.

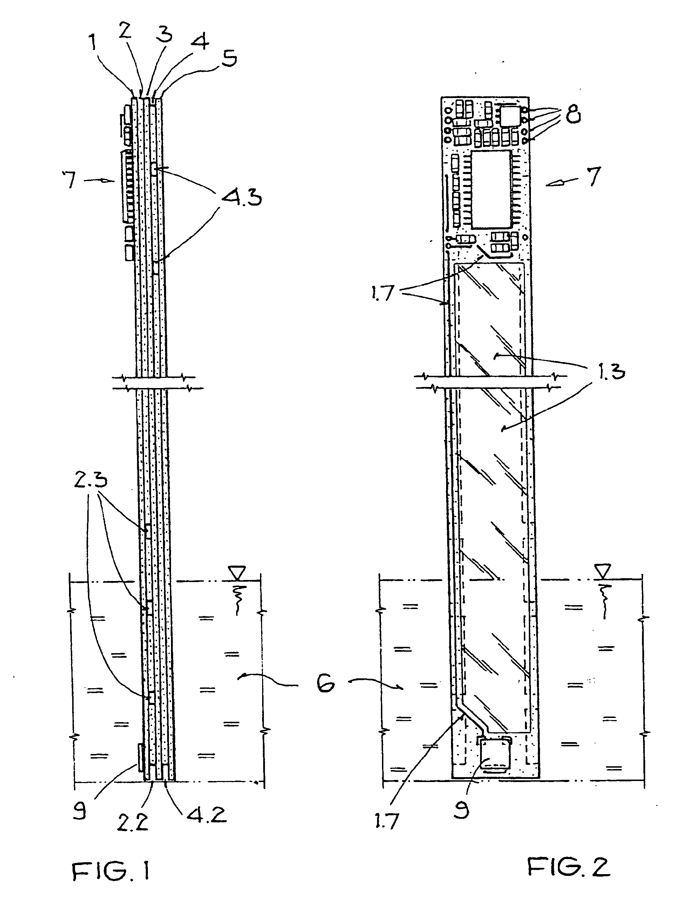

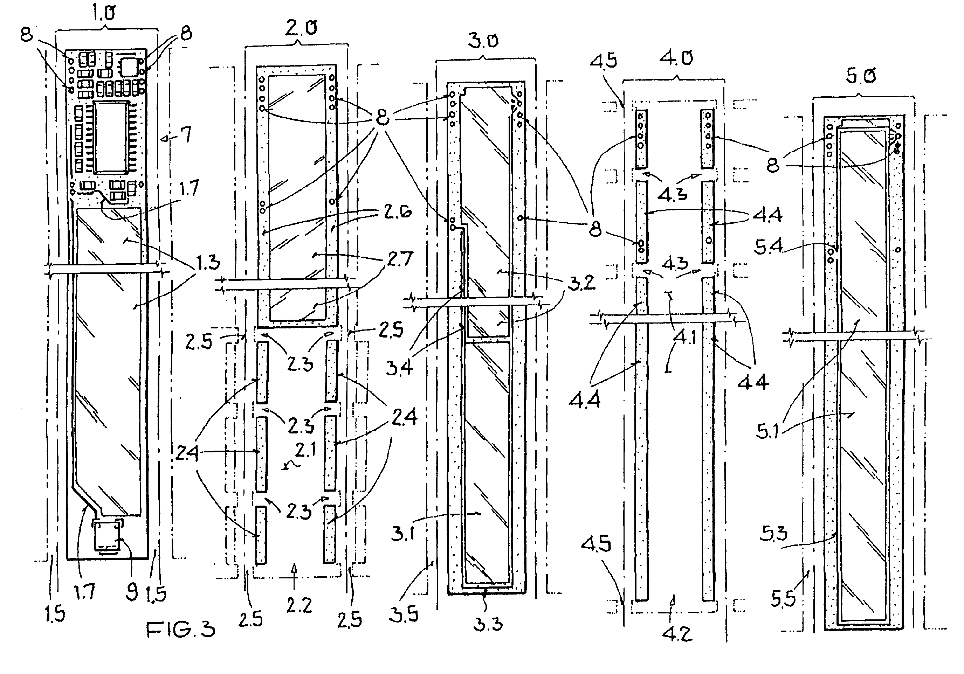

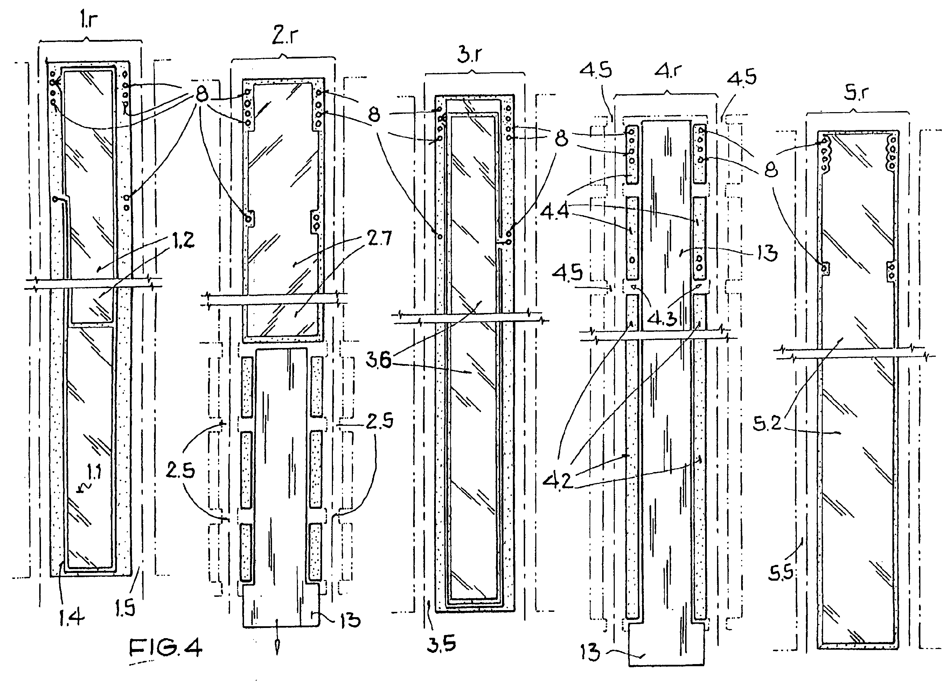

Figur 1 zeigt eine Seitenansicht einer kapazitiven Sensoranordnung. Zunächst wird in Figur 1 besonders deutlich, daß die Trägerplatten 1, 3 und 5, bis zum Boden des Behälters ragen, während die als Abstandhalter dazwischenliegenden Zwischenplatten 2 und 4 untere Aussparungen 2.2 und 4.2 aufweisen, durch die das Medium 6 in die sich im Inneren der Zwischenplatten 2 und 4 befindlichen Hohlräume (2.1, 4.1) eindringen kann. Diese Hohlräume werden in späteren Figuren, insbesondere Fig. 3 und 4 noch näher dargestellt und entsprechend erläutert. Weitere, in Fig. 1 seitlich angeordnete Aussparungen 2.3 und 4.3 im verbleibenden Randbereich der Zwischenplatten 2 und 4 ermöglichen das Ein- und Ausströmen des Mediums 6 bzw. den Druckausgleich, so daß sich die Füllhöhe des Mediums 6 innerhalb der Hohlräume (2.1,4.1) an die Füllhöhe außerhalb der Sensoranordnung anpassen kann. Der Abstand zwischen den Trägerplatten 1,3 und 5 wird dabei durch die Dicke der Zwischenplatten 2 und 4 bestimmt und ist vorzugsweise so gewählt, daß die in den Hohlräumen wirkenden Kapillarkräfte für die Genauigkeit der Füllstandsmessung vernachlässigbar sind.

In dieser bevorzugten Ausgestaltung ist die Außenseite 1.0 der ersten Trägerplatte 1 mit einer Auswerteschaltung 7 ausgestaltet, die noch deutlicher in Figur 2 skizzenhaft in der Vorderansicht dar gestellt ist. Außerdem ist ein weiterer Sensor 9 vorgesehen, der beispielsweise die Temperatur oder die chemische Zusammensetzung oder Qualität des Mediums 6 erfaßt. Das Medium 6 kann prinzipiell flüssig oder gasförmig sein. Als Ausführungsbeispiel wird ein Ölstandssensor gezeigt, wie er für Kraftfahrzeuge vorgesehen ist.

Figur 3 zeigt nun die Vorderseiten 1.0,2.0,3.0,4.0,5.0 der 5 einzelnen Ebenen, also der Trägerplatten 1, 3 und 5 sowie der Zwischenplatten 2 und 4 in einer Explosionsdarstellung jeweils seitlich versetzt zueinander. Die Trägerplatten 1, 3 und 5 sind untereinander durch die Zwischenplatten 2 und 4 hinweg durch metallisierte Bohrungen, sogenannte Durchkontaktierungen 8 miteinander verbunden, wobei jeweils entsprechend der zu realisierenden Schaltung jeweils ein Teil der Durchkontaktierungen 8 über Leitbahnen 1.7,3.4,5.4 mit den Kondensatorbelägen 3.1,5.1, zur Abschirmung dienenden Metallbelägen 1.3,2.7,3.2 oder Bauelementen 7,9 verbunden sind, wie dies anhand der Figur 6 noch näher erläutert werden soll.

In Figur 3 entspricht die Vorderseite der ersten Trägerplatte 1 und damit eine der zwei Außenseiten der Sensoranordnung der Darstellung aus Figur 2 und zeigt die Auswerteschaltung 7 mit Leitbahnen 1.7 und Bauelementen sowie einen Metallbelag 1.3 zur Abschirmung gegen elektromagnetische Felder. Außerdem sind SMD - Kontaktpunkte für den Sensor 9 zu erkennen.

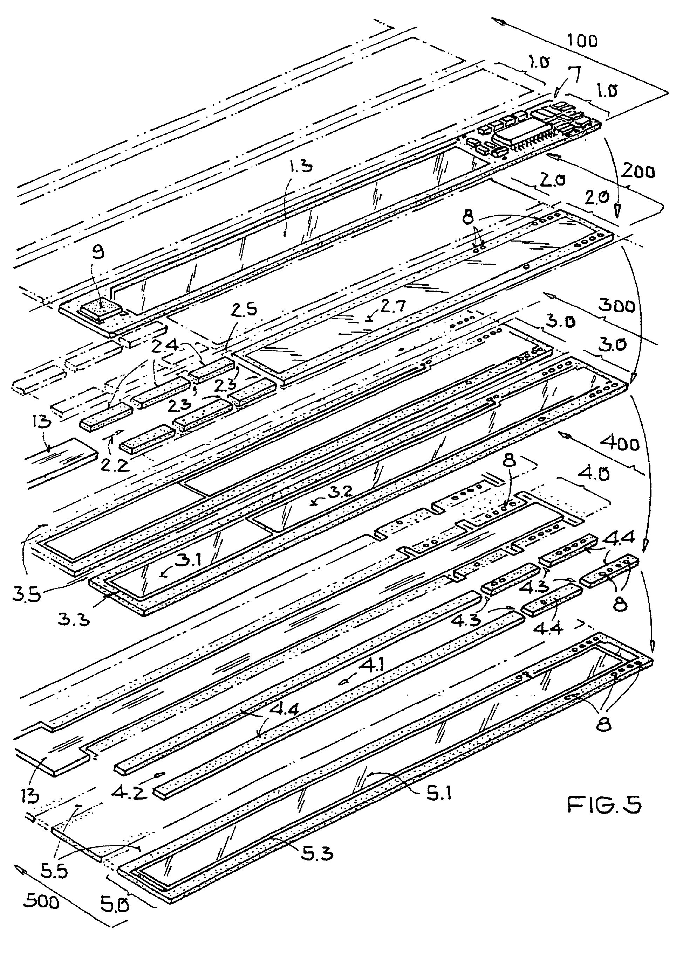

Versetzt dazu ist die im montierten Zustand darunterliegende Zwischenplatte2 dargestellt, der im unteren Bereich durch einen Randbereich 2.4 umrandet eine mittlere Aussparung 2.1 aufweist, die einen Hohlraum bildet, in den durch die untere Aussparung 2.2 und die seitlichen Aussparungen 2.3 das Medium 6 ein- und ausströmen, insbesondere den Füllstand entsprechend dem Füllstand außerhalb des Hohlraums anpassen kann. Die einzelnen Abschnitte des Randbereichs 2.4 der Zwischenplatte 2 dienen als zusätzliche Stabilisierung zwischen den Aussparungen 2.3 und sind vorzugsweise größer als die Aussparungen 2.3. Die Randbereiche 2.4 sind vor dem Freischneiden durch Streben 2.5 untereinander verbunden, wie dies in Fig. 5 noch deutlicher wird. Die Größe der mittleren Aussparung 2.1 ist angepaßt an die dazu benachbarten Kondensatorbeläge 1.1 der ersten und 3.1 der zweiten, mittleren Trägerplatte 3. Der Zwischenplatte2 kann im oberen Bereich zusätzlich mit einem Metallbelag 2.7 als Abschirmung versehen werden. Der seitlich verbleibende Randbereich 2.6 ist jeweils im allgemeinen nicht metallisiert, da dort der Kleber zum Verbinden der Trägerplatten 1,3,5 mit den Zwischenplatten 2,4 aufgebracht wird.

Die zweite und mittlere Trägerplatte 3 stellt die dritte Ebene der Sensoranordnung dar und ist zur Ansicht der Vorderseite wiederum versetzt dargestellt. Die zweite Trägerplatte 3 weist im unteren Bereich einen Kondensatorbelag 3.1 auf, der von einem metallischen Rand 3.3 umgeben wird, der jedoch vom Kondensatorbelag 3.1 beabstandet bzw. isoliert ist. Der metallische Rand 3.3 dient zur Abschirmung. Er wird bspw. für Leitbahnen 3.4 zu den einzelnen Kondensatorbelägen unterbrochen. Zur Abschirmung kann ebenfalls der obere Bereich der Vorderseite zweiten Trägerplatte 3 mit einem Metallbelag 3.2 versehen und dieser auf Masse geschaltet werden. Außerdem ist die Leitbahn 3.4 zwischen einer metallischen Bohrung 8 zum Kondensatorbelag 3.1 zu erkennen.

Die zweite Zwischenplatte 4 in Figur 3 weist nun in diesem Ausführungsbeispiel eine über die gesamte Länge der Sensoranordnung reichende mittlere Aussparung 4.1 entsprechend dem Kondensatorbelag 5.1 auf der dritten Trägerplatte 5 auf. Seitlich sind die Randbereiche 4.2 der Zwischenplatte 4 zum Konstanthalten des Abstandes zwischen den beiden Trägerplatten 3 und 5 bzw. den darauf angeordneten Kondensatorbelägen 3.6 (3.6 ist auf der Rückseite der zweiten Trägerplatte 3, dargestellt in Figur 4) und 5.1 angeordnet. Die Zwischenplatte 4 weist untere Aussparungen 4.2 und seitliche Aussparungen 4.3 für das Medium 6 auf, wobei bei einer teilweisen Füllung des entstehenden Hohlraums mit dem Medium die oberen seitlichen Aussparungen 4.3 den Volumen - bzw. Druckausgleich ermöglichen.

Wiederum seitlich versetzt ist nun auch die Vorderseite der dritten Platte 5 dargestellt, die über die gesamte Länge mittig den Kondensatorbelag 5.1 aufweist, der über eine Leitbahn 5.4 mit einer der metallisierten Bohrungen 8 verbunden und von einem metallischen Rand 5.3 gegen andere Feldeinflüsse abgeschirmt wird.

Die Figur 4 zeigt die Rückseiten 1.r,2.r,3.r,4.r,5.r der 5 Ebenen, wobei der Kondensatorbelag 1.1 auf der Rückseite 1.r der ersten Trägerplatte 1 symmetrisch zum Kondensatorbelag 3.1 auf der zweiten Trägerplatte 3 ist und mit dieser eine erste Kondensatoranordnung bildet, die beispielsweise bei Einhaltung einer Mindestfüllhöhe immer vollständig vom Medium 6 gefüllt ist und daher zur Bestimmung der relativen Dielektrizitätskonstante des Mediums 6 dient. Die Zwischenplatten 2 und 4 sind vorzugsweise vorder- wie rückseitig identisch. Wiederum sind um die Kondensatoranordnung 1.1 umlaufende Bahnen 1.4 und zusätzlich auf den freien Flächen Metallbeläge 1.2 zur Abschirmung vorgesehen.

Die Rückseite 3.r der zweiten Platte 3 weist analog zur Kondensatorbelag 5.1 auf der Vorderseite der dritten Platte 5 einen Kondensatorbelag 3.6 auf. Diese bilden die zweite Kondensatoranordnung, die beispielsweise zur Füllhöhenmessung eingesetzt wird, wobei die aus der ersten Kondensatoranordnung bestimmte Dielektrizitätskonstante zugrundegelegt wird.

Außerdem sind in Figur 4 Einlegestreifen 13 angedeutet, der vor dem Verkleben der Zwischenplatten 2 und 4 mit den benachbarten Trägerplatten 1,3,5 in die mittleren Aussparungen 2.1,4.1 eingelegt werden und verhindert, daß beim Verkleben durch die Anpressung die Trägerplatten 1,3,5 verbogen werden. Nachfolgend wird der Einlegestreifen 13 durch die unteren Aussparungen 2.2.,4.2 wieder entfernt. Die Rückseite 5.r weist als nach aussen gerichtete Fläche wiederum einen Abschirmungsbelag 5.2 auf.

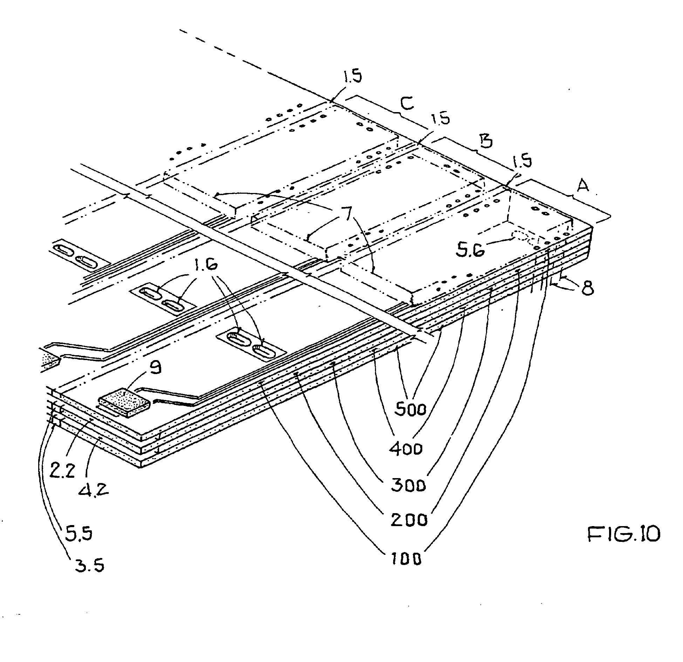

Figur 5 und 10 verdeutlichen die parallele Herstellung mehrerer dieser Sensoranordnungen gleichzeitig nebeneinander in Mehrebenenleiterplattentechnik, indem auf den Tafeln 100,300 und 500 aus Trägerplattenmaterial jeweils beabstandet voneinander mehrere identische Anordnungen erzeugt werden. So weist die Tafel 100 mehrere erste Platten 1 nebeneinander auf und die Tafel 200 mehrere der Zwischenplatten 2, wobei die einzelnen Segmente über Streben 2.5 miteinander verbunden sind. Dies setzt sich auf den Tafeln 300 bis 500 entsprechend fort. Alle diese Tafeln 100 bis 500 werden übereinander ausgerichtet miteinander verklebt und dann die einzelnen Sensoranordnungen freigeschnitten, wobei die Streben 1.5,2.5,3.5,4.55.5 zwischen den einzelnen Segmenten der Zwischen- und Trägerplatten 1,2,3,4,5 abgetrennt werden.

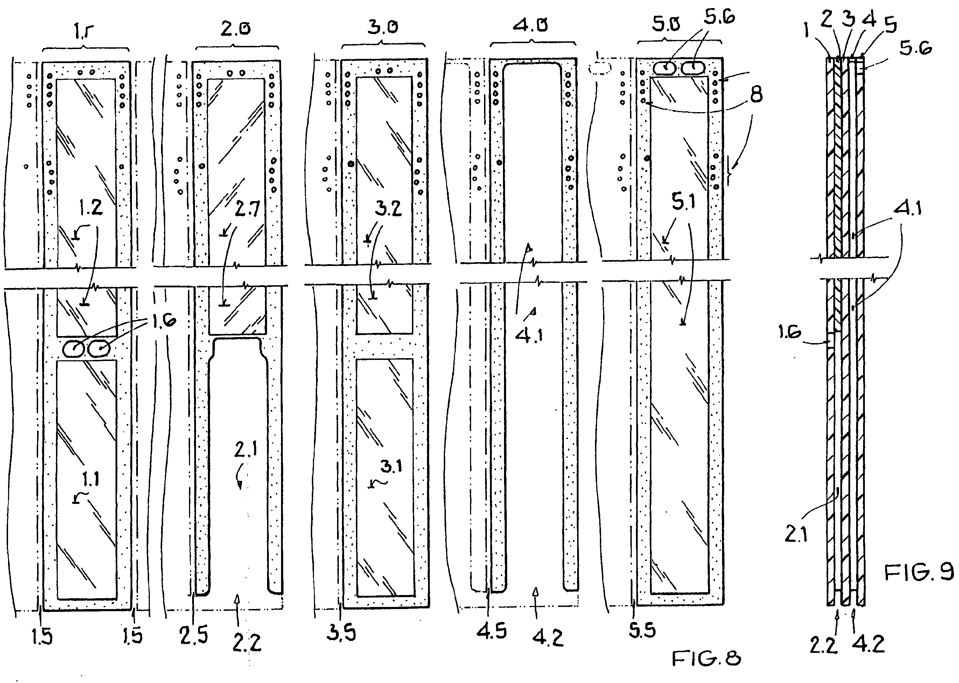

Figur 10 verdeutlicht diese gemeinsame Herstellung nochmals, wobei dabei die Unterteilung der Tafeln 100,200,300,400,500 der Träger- und Zwischenplatten in Segmente A,B,C,... und deren Verbindung durch die Streben 1.5,2.5,3.5,4.5,5.5 skizzenhaft angedeutet ist. Ausserdem sind die Durchkontaktierungen 8 visualisiert. Zudem sind die identisch nebeneinander liegenden unteren Einströmöffnungen 4.2 und 2.2 der Hohlräume 2.1 und 4.1 zu erkennen. Während der Hohlraum 4.1 durch seitliche Öffnungen 4.3 ausgeglichen wird, ist für den Hohlraum 2.1 die andere Alternative mit einer Öffnung 1.6 in der Trägerplatte 1 gezeigt, die in den Figuren 8 und 9 noch näher gezeigt wird.

Figur 6 und der daraus vergrößerte Ausschnitt 6a zeigen einen Schnitt durch die Sensoranordnung bestehend aus den drei Trägerplatten 1, 3 und 5 mit den Zwischenplatten 2 und 4. Auf den Außenseiten der äußeren Trägerplatten 1 und 5 sind jeweils Metallbeläge 1.3 und 5.2 zur Abschirmung vorgesehen, zur Abschirmung weisen die Platten im inneren zusätzlich die metallischen Ränder 1.4, 3.3 und 5.3 auf, die gemeinsam ebenfalls auf Masse geschaltet sind. In Figur 6a ist diejenige metallisierte Bohrung 8 zwischen den fünf Ebenen 1 bis 5 dargestellt, die diesen Masseanschluß aufweist und mit der dieser Ränder 1.3, 3.3 und 5.3 sowie die Metallbeläge 1.5 und 5.5 entsprechend über aus Leitbahnen ausgeformte Kontaktzonen verbunden ist. Die Einbringung der Durchkontaktierungen 8 und deren Verbindung auf den einzelnen Trägerplatten 1,3,5 ist an sich bereits aus der Mehrebenen-Leiterplattentechnik bekannt. Dabei werden im Randbereich auf den jeweiligen Seiten der Trägerplatten 1,3,5 zunächst aus den Leiterbahnen für jeweils einen Teil der späteren Bohrungen 8 Kontaktzonen ausgebildet. Nach dem Verbinden der einzelnen Platten 1 bis 5 miteinander werden die Bohrungen 8 eingebracht und metallisiert. Dabei entsteht ein Kontakt der jeweilige Kontaktzone der Leiterbahn mit der Metallisierung in der Bohrung 8 und über diese mit einer anderen Kontaktzone auf einer anderen Trägerplatte. Die Durchkontaktierungen 8 werden also üblicherweise erst nach dem Verbinden der Träger- und Zwischenplatten 1 bis 5, jedoch vor dem Freischneiden der Segmente aus den Tafeln eingebracht.

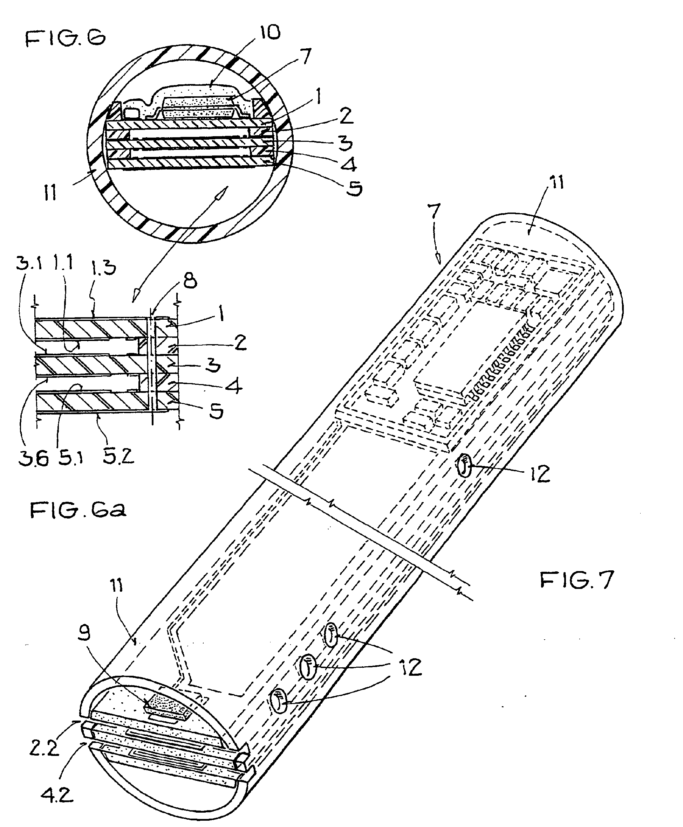

Außerdem sind in Figur 6 bzw. 6a die durch die Zwischenplatten 2 und 4 gebildeten Hohlräume für das Medium und die beidseitig dieser jeweils angeordneten Kondensatorbeläge 1.1 und 3.1 für die erste Kondensatoranordnung sowie 3.6 und 5.1 für die zweite Kondensatoranordnung zu erkennen. Zusätzlich zeigt Figur 6, wie die Sensoranordnung in einem Abschirmrohr 11 angeordnet ist, welches auch mit seinen Öffnungen 12 für das Medium in der Figur 7 dargestellt ist. Die Auswerteschaltung 7 wird durch eine Vergußmasse 10 geschützt. Durch die Verwendung kupferkaschierter Leiterplatten als Trägerplatten 1,3,5 können durch einen einfachen Ätzprozeß die Kondensatorbeläge 1.1,3.1,3.6,5.1, Metalibeläge 1.2,1.3, 3.2,5.2 und metallischen Bahnen 1.4,3.3,5.3 der Abschirmungen sowie die Leitbahnen 1.7,3.4,5.4 strukturiert werden. Außerdem sind durch die Mehrebenen-Leiterplattentechnik bereits geeignete Klebstoffe, Isolationsüberzüge etc. sowie die Technik zur Metallisierung der Bohrungen 8 bekannt.

Die Figur 8 zeigt in einem weiteren Ausführungsbeispiel die alternative Ausgestaltung der Öffnungen 1.6 und 5.6 in den Trägerplatten 1 und 5 zum Ein- und

Ausströmen des Mediums 6 in bzw. aus dem jeweiligen Hohlraum 2.1 und 4.1 bzw. zum Druckausgleich. Veranschaulicht wird diesen Durchströmen bzw. der Druckausgleich auch anhand eines Schnitts senkrecht durch die Träger- und Zwischenplatten 1-5 in Figur 9, wo durch die Öffnungen 1.6 und 2.2 der Hohlraum 2.1 in der ersten Zwischenplatte durchströmt wird, während durch die Öffnung 4.2 das Medium 6 in den Hohlraum 4.1 in der zweiten Zwischenplatte 4 bis zu der im äusseren Behälter vorliegenden Füllhöhe steigt und durch die Öffnung 5.6 in der unteren Trägerplatte 5 der Druckausgleich erfolgt.

Der Vorteil dieser zweiten Alternative mit den Strömungsöffnungen in den Trägerplatten 1 und 5 liegt in einem nicht in Abschnitte unterteilten Randbereich 2.4 und 4.4 um den Hohlraum 2.1 bzw. 4.2 herum und eine damit verbundene noch höhere Stabilität, wobei die Randbereiche der Zwischenplatten 2 und 4 sowie die Trägerplatten 1,3,5 wiederum durch Streben zunächst miteinander verbunden sind und nachfolgend entlang dieser freigeschnitten werden.

### Bezugszeichenliste

- 1: erste Trägerplatte, 1.0 = Vorderseite, 1.r = Rückseite
1. 1 Kondensatorbelag (rückseitig)
1.2 abschirmender Metallbelag
1.3 abschirmender Metallbelag
1.4 umlaufende Abschirmungsbahn
1.5 Strebe zwischen den einzelnen Trägerplattensegmenten der Tafel
1.6 Löcher als Strömungsöffnungen für das Medium 6
1.7 Leitbahnen zwischen Sensor, Auswerteschaltung und Durchkontaktierungen
- 2: Zwischenplatte (2.Ebene), 2.0 = Vorderseite, 2.r = Rückseite
2.1 mittlere, den Hohlraum bildende Aussparung
2.2 untere Einströmöffnung
2.3 seitliche Stömungsöffnung in der Zwischenplatte 2
2.4 abstandhaltender Randbereich um den Hohlraum
2.5 Verbindungsträger für die einzelnen Abstandshalterabschnitte
2.6 Randzone mit Durchkontaktierungen
2.7 Abschirmung
- 3: mittlere Trägerplatte (3.Ebene), 3.0 = Vorderseite, 3.r = Rückseite
3.1 vorderseitiger Kondensatorbelag
3.2 Abschirmungsbelag
3.3 Abschirmbahn
3.4 Leitbahn zwischen 8 und 3.1
3.5 Strebe zwischen den einze!nen Trägerplattensegmenten der Tafel
3.6 rückseitiger Kondensatorbelag
- 4: 2. Zwischenplatte (4.Ebene), 4.0 = Vorderseite, 4.r = Rückseite
4.1 mittlere, den Hohlraum bildende Aussparung
4.2 untere Einströmöffnung
4.3 obere Strömungsöffnung
4.4 abstandhaltender Randbereich
4.5 Trägerstrebe für einzelnen Segmente des Abstandhalters
- 5: 3. Trägerplatte (5.Ebene), 5.0 = Vorderseite, 5.r = Rückseite
5. 1 Kondensatorbelag
5.2 abschirmender Metallbelag
5.3 Abschirmbahn
5.4 Leitbahn zwischen Kondensatorbelag und Durchkontaktierung
5.5 Strebe zwischen den einzeinen Trägerplatterisegmenten der Tafel
5.6 Löcher zum Ein- und Ausströmen des Mediums bzw. zum Druckausgleich
- 6: Medium
- 7: Auswerteschaltung
- 8: Vias/Durchkontaktierungen
- 9: Ölqualitätssensor oder Temperatursensor
- 10: Vergußmasse zur Fixierung der Auswerteschaltung
- 11: Abschirmrohr
- 12: Strömungsöffnungen im Rohr für das Medium
- 13: Teflon-Einlagestreifen
- 100: Tafel aus Tragerplattenmaterial mit Segmenten A,B,C,... der ersten Trägerplatte 1
- 200: Tafel aus Zwischenplattenmaterial mit Segmenten A,B,C,... der ersten Zwischenplatte 2
- 300: Tafel aus Trägerplattenmaterial mit Segmenten A,B,C,... der mittleren Trägerplatte 3
- 400: Tafel aus Zwischenplattenmaterial mit Segmenten A,B,C,... der ersten Zwischenplatte 2
- 500: Tafel aus Trägerplattenmaterial mit Segmenten A,B,C,... der dritten Trägerplatte 5

## Patentansprüche

1. Kapazitive Sensoranordnung zur Verwendung in einem flüssigen oder gasförmigen Medium (6),
a) bestehend aus wenigstens zwei in einem durch Abstandshaltemittel vorgegebenen Abstand parallel angeordneten Trägerplatten (1,3,5),
b) wobei auf zueinander gerichteten Seiten zweier benachbarter Trägerplatten jeweils metallische Kondensatorbeläge (1.1 /3.1 und 3.6/5.1) angeordnet sind, die durch Verschaltung einen Kondensator bilden, der vom Medium (6) zumindest teilweise gefüllt ist, **dadurch gekennzeichnet, daß**
c) als Abstandshaltemittel zwischen zwei benachbarten Trägerplatten (1,3,5) jeweils eine Zwischenplatte (2,4) mit konstanter Dicke angeordnet ist, deren äußere Abmessungen denen der Trägerplatten im wesentlichen entsprechen und jeweils die Zwischenplatte (2,4) im Bereich, in dem die benachbarten Trägerplatten (1,3,5) die Kondensatorbeläge (1.1/3.1 und 3.6/5.1) aufweisen, zur Erzeugung eines Hohlraums mit einer mittleren Aussparung (2.1,4.1) versehen ist und
d) darüber hinaus jeweils in den Trägerplatten und/oder der Zwischenplatte (1,2,3,4,5) mehrere Aussparungen (1.6.2.2.2.3.4.2.4.3.5.6) zum Ein - und Ausströmen des Mediums (6) in und aus dem Hohlraum (2.1.4.1) vorgesehen sind.

2. Sensoranordnung nach Anspruch 1, **dadurch gekennzeichnet, daß** jeweils in der Zwischenplatte (2,4) um den Hohlraum (2.1,4,.1) ein Randbereich (2.4,4.4) verbleibt, der durch die Aussparungen (2.2,2.3,4.2,4.3) zum Ein - und Ausströmen des Mediums (6) in und aus dem Hohlraum (2.1,4.1) unterbrochen ist, wobei die Ausdehnung der Aussparungen (2.2,2.3,4.2,4.3) im Randbereich (2.4,4.4) vorzugsweise kleiner ist als der durch diese Aussparungen verbleibende Randbereich der Zwischenplatte (2,4).

3. Sensoranordnung nach Anspruch 1, **dadurch gekennzeichnet, daß** die Aussparungen (1.6,5.6) zum Ein - und Ausströmen des Mediums (6) in und aus dem Hohlraum (2.1,4.1) jeweils zumindest teilweise durch Löcher (1.6,5.6) in den Trägerplatten (1,5) ausgebildet sind.

4. Sensoranordnung nach einem der vorangehenden Ansprüche, **dadurch gekennzeichnet, daß** jeweils sowohl durch die Trägerplatten (1,3,5) als auch durch die Zwischenplatte (2,4) hindurch metallisierte Durchkontaktierungen (8) eingebracht sind, die auf einzelnen Seiten der Trägerplatten (1,3,5) über Leiterbahnen (3.4) zumindest teilweise mit Kondensatorbelägen (1.1 /3.1 und 3.6/5.1) verbunden sind.

5. Sensoranordnung nach Anspruch 4, **dadurch gekennzeichnet, daß**
a1) bei genau zwei Trägerplatten auf zumindest einer dieser zwei beziehungsweise
a2) bei drei und mehr Trägerplatten auf zumindest einer außen liegenden Trägerplatte (1)
b) auf der von den anderen Trägerplatten (3,5) abgewandten Seite mit Sensoren, Leitbahnen und einer Auswerteschaltung (7) versehen ist, wobei die Auswerteschaltung (7) über die Leitbahnen (1.7,3.4,5.4) und Durchkontaktierungen (8) mit den Kondensatorbelägen (1.1/3.1 und 3.6/5.1) auf den einzelnen Trägerplatten (1,3,5) verbunden ist.

6. Sensoranordnung nach einem der vorangehenden Ansprüche, **dadurch gekennzeichnet, daß** wenigstens drei Trägerplatten vorgesehen sind und die beidseitig zumindest einer mittleren Trägerplatte (3) angeordneten Kondensatorbeläge (3.1,3.6) beide auf ein gleiches Spannungspotential geschaltet sind.

7. Sensoranordnung nach einem der vorangehenden Ansprüche, **dadurch gekennzeichnet, daß** die Trägerplatten (1,3,5) mit einer Abschirmung in Form einer den Kondensatorbeiag (1.1,3.1,3.6,5.1) zumindest teilweise umlaufenden, von dem Kondensatorbelag jedoch getrennten metallischen Bahn (1.4,3.3,5.3) versehen ist, welche auf ein Bezugspotential geschaltet ist.

8. Sensoranordnung nach Anspruch 6 und 7, **dadurch gekennzeichnet, daß** die beidseitig einer mittleren Trägerplatte (3) angeordneten Kondensatorbeläge (3.1,3.b) beide auf das Bezugspotential geschaltet sind.

9. Sensoranordnung nach einem der vorangehenden Ansprüche, **dadurch gekennzeichnet, daß**
a1) bei genau zwei Trägerplatten auf diesen
a2) bei drei und mehr Trägerplatten auf den außen liegenden Trägerplatten (1,5)
b) auf den entgegengesetzt zu der/den anderen Trägerplatte(n) gerichteten Seiten mit jeweils einem Metallbelag (1.3, 5.2) versehen sind, welcher zur Abschirmung auf ein Bezugspotential geschaltet ist.

10. Verfahren zur Herstellung einer Sensoranordnung nach einem der vorangehenden Ansprüche, **dadurch gekennzeichnet, daß** in Mehrebenen-Leiterplattentechnik:
a. auf den Trägerplatten (1,3,5) durch Metallabscheidung und Ätzstrukturierung Kondensatorbeläge (1.1/3.1 und 3.6/5.1), Leitbahnen (1.7,3.4,5.4) und/oder zur Abschirmung dienende metallischen Bahnen (1.4,3.3,5.3) und Metallbeläge (1.3, 5.2) gemeinsam aufgebracht und strukturiert werden,
b. Träger- und Zwischenplatten zumindest örtlich untereinander durch Klebstoff mechanisch verbunden werden, wobei die Zwischenplatten eine konstante Dicke aufweisen,
c. durch die Trägerplatten (1,3,5) als auch die mit den Aussparungen versehenen Zwischenplatten (2,4) metallisierte Durchkontaktierungen (8) eingebracht werden, die mit den Kondensatorbelägen (1.1/3.1 und 3.6/5.1), Leitbahnen (1.7,3.4,5.4) und/oder zur Abschirmung dienenden metallischen Bahnen (1.3,3.3,5.3) und Metallbelägen (1.3, 5.2) zumindest teilweise elektrisch verbunden sind.

11. Verfahren nach Anspruch 10, **dadurch gekennzeichnet, daß** eine Anzahl von Sensoranordnungen gleichzeitig hergestellt wird, indem :
a) Tafeln (100,200,300,400,500) aus Träger- und Zwischenplattenmaterial in entsprechend der Anzahl von Sensoranordnungen viele Segmente (A,B,C,..) unterteilt werden, wobei die Segmente (A,B,C,..) voneinander beabstandet die Träger- und Zwischenplatten (1,2,3,4,5) bilden und die einzelnen Segmente am Rand eines jeden Segments über Streben (1.5,2.5,3.5,4.5,5.5) verbunden sind,
b) auf einer jeden dieser Tafeln aus Trägerplattenmaterial (100,300,500) die Segmente (A,B,C,..) identisch mit Kondensatorbelägen (1.1,3.1,3.6,5.1), Leitbahn(en) (1.7,3.4,5.4) und/oder zur Abschirmung dienende metallischen Bahnen (1.4,3.3,5.3) und Metallbelägen (1.3, 5.2) strukturiert werden,
c) aus der/den Tafel(n) aus Zwischenplattenmaterial (200,400) zur Erzeugung jeweils eines Hohlraums in den Segmenten (A,B,C,..) entsprechende Aussparungen (2.1,4.1) ausgeformt werden, wobei die nach den Aussparungen (2.1,4.1) verbleibenden Randbereiche der Segmente dieser Tafeln durch die Streben (2.5,4.5) verbunden sind,
d) die Tafeln der Träger- und Zwischenplatten (100,200,300,400,500) miteinander verklebt, die Durchkontaktierungen (8) eingebracht und nachfolgend die einzelnen Sensoranordnungen freigeschnitten werden, wobei die einzelnen Segmente (A,B,C,..) von den Streben (1.5,2.5,3.5,4.5,5.5) getrennt werden.

12. Verfahren nach einem der vorangehenden Ansprüche, **dadurch gekennzeichnet, daß** zum Verkleben der Träger- und Zwischenplatten zeitweise die Aussparungen (2.1,2.2,2.3/4.1.4.3) der Zwischenplatten (2,4) zumindest teilweise entsprechend deren Dicke gefüllt werden (13) und nach dem Verkleben die Füllung wieder entfernt wird, um Verformungen der Trägerplatten im Bereich des Hohlraums während des Verklebens zu vermeiden.

13. Verfahren nach Anspruch 12, **dadurch gekennzeichnet, daß** zum Verkleben in die mittlere Aussparung (2.1,4.1) der Zwischenplatten (2,4) ein Streifen (13) formstabilen Materials, insbesondere ein PTFE-Streifen, mit einer der Dicke der Zwischenplatten (2,4) entsprechenden Stärke eingelegt wird und nach dem Verkleben dieser Streifen (13) durch eine der Aussparungen (2.2,4.2) der Zwischenplatten (2,4) wieder entfernt wird.

14. Verwendung einer Mehrebenen-Leiterplattenanordnung für eine kapazitive Sensoranordnung in einem flüssigen oder gasförmigen Medium (6),
a. bestehend aus einer Mehrzahl von Trägerplatten (1,3,5), die mit Leitbahnen (1.7,3.4,5.4) und Kondensatorbelägen (1.1,3.1,3.6,5.1) strukturiert sind,
b. wobei zwischen den Trägerplatten (1,3,5) Zwischenplatten (2,4) mit konstanter Dicke vorgesehen sind, die im Bereich, in dem die benachbarten Trägerplatten (1,3,5) die Kondensatorbeläge (1.1/3.1 und 3.6/5.1) aufweisen, zur Bildung eines Hohlraums mit einer mittleren Aussparung (2.1,4.1) versehen sind,
c. darüber hinaus die Trägerplatten und/oder die Zwischenplatten (1,2,3,4,5) zusätzlich mit Aussparungen (1.6,2.3,4.3,5.6) zum Ein - und Ausströmen des Mediums (6) in und aus dem Hohlraum versehen sind und
d. die Träger und Zwischenplatten (1,2,3,4,5) untereinander durch metallisierte Durchkontaktierungen (8) elektrisch verbunden sind.

## Claims

1. A capacitive sensor arrangement for use a in a fluid or gaseous medium (6),
a) consisting of at least two mounting panels (1, 3, 5) which are arranged in parallel at a distance from each other specified by a separator
b) whereby on the sides of two adjacent mounting panels which face each other, metal capacitor covers (1.1/3.1 and 3.6/5.1) are in each case arranged, which form a capacitor when switched, which is filled at least partially by a medium (6), **characterised in that**
c) an interim panel (2, 4) with a constant thickness is arranged in each case as a separator between two adjacent mounting panels (1, 3, 5), the outer dimensions of which essentially correspond to those of the mounting panels, and in each case, the interim panel (2, 4) being fitted with a central recess (2.1, 4.1) in the area in which the adjacent mounting panels (1, 3, 5) comprise the capacitor covers (1.1/3.1 and 3.6/5.1), in order to form a hollow area, and
d) in addition, several recesses (1.6, 2.2, 2.3, 4.2, 4.3, 5.6) are inserted in each case in the mounting panels and/or the interim panel (1, 2, 3, 4, 5) to allow the medium (6) to flow in and out of the hollow area (2.1, 4.1).

2. A sensor arrangement according to claim 1, **characterised in that** in each case, a border area (2.4, 4.4) remains in the interim panel (2, 4) around the hollow area (2.1, 4,.1), which has recesses (2.2, 2.3, 4.2, 4.3) to allow the medium (6) to flow in and out of the hollow area (2.1, 4.1), the expansion of the recesses (2.2, 2.3, 4.2, 4.3) in the border area (2.4, 4.4) preferably being smaller than the border area of the interim panel (2, 4) which remains from these recesses.

3. A sensor arrangement according to claim 1, **characterised in that** the recesses (1.6, 5.6) for allowing the medium (6) to flow in and out of the hollow area (2.1, 4.1) are in each case at least partially formed by holes (1.6, 5.6) in the mounting panels (1, 5).

4. A sensor arrangement according to one of the above claims, **characterised in that** in each case, metal-coated feedthroughs (8) are inserted through both the mounting panels (1, 3, 5) and the interim panel (2, 4), which are connected at least partially on the individual sides of the mounting panels (1, 3, 5) via strip conductors (3.4) with capacitor covers (1.1/3.1 und 3.6/5.1).

5. A sensor arrangement according to claim 4, **characterised in that**
a1) when there are precisely two mounting panels, on at least one of these two, or
a2) when there are three mounting panels or more, on at least one external mounting panel (1)
b) on the side facing away from the other mounting panels (3, 5) sensors, strip conductors and an evaluation switch (7) are arranged, the evaluation switch (7) being connected via the strip conductors (1.7, 3.4, 5.4) and feedthroughs (8) with the capacitor covers (1.1/3.1 und 3.6/5.1) on the individual mounting panels (1, 3, 5).

6. A sensor arrangement according to one of the above claims, **characterised in that** at least three mounting panels are fitted, and that capacitor covers (3.1, 3.6) arranged on both sides of at least a central mounting panel (3) are both connected to a uniform voltage potential.

7. A sensor arrangement according to one of the above claims, **characterised in that** the mounting panels (1, 3, 5) are fitted at least partially with a screen in the form of a metal track (1.4, 3.3, 5.3) which runs at least partially around it, yet which is separated from the capacitor cover, which is connected to a reference potential.

8. A sensor arrangement according to claim 6 and 7, **characterised in that** the capacitor covers (3.1, 3.6) which are arranged on both sides of a central mounting panel (3) are both connected to the reference potential.

9. A sensor arrangement according to one of the above claims, **characterised in that**
a1) when there are precisely two mounting panels, on these
a2) when there are three or more mounting panels, on the external mounting panels (1, 5)
b) on each of the sides facing the other mounting panel(s), a metal cover (1.3, 5.2) is arranged, which is connected to a reference potential for screening purposes.

10. A method for manufacturing a sensor arrangement according to one of the above claims, **characterised in that** in multiple layer circuit board technology:
a. on the mounting panels (1, 3, 5), using metal deposition and etching structuring, capacitor covers (1.1/3.1 and 3.6/5.1), strip conductors (1.7, 3.4, 5.4) and/or metal tracks used as screens (1.4, 3.3, 5.3) and metal covers (1.3, 5.2) are installed and structured together
b. mounting and interim panels are mechanically connected, at least in places, with bonding agent, the interim panels comprising a constant thickness
c. through the mounting panels (1, 3, 5) and the interim panels (2, 4) which are provided with recesses, metal-coated feedthroughs (8) are inserted, which are at least partially electrically connected to the capacitor covers (1.1/3.1 and 3.6/5.1), the strip conductors (1.7, 3.4, 5.4) and/or the metal tracks used as a screen (1.3, 3.3, 5.3) and the metal covers (1.3, 5.2)

11. A method according to claim 10, **characterised in that** a number of sensor arrangements are manufactured simultaneously, whereby:
a) sheets (100, 200, 300, 400, 500) consisting of mounting panel and interim panel material are divided into many segments (A, B, C,...), depending on the number of sensor arrangements, the segments (A, B, C,...), which are at a distance from each other, forming the mounting and interim panels (1, 2, 3, 4, 5) and the individual segments being connected on the border of each segment using struts (1.5, 2.5, 3.5, 4.5, 5.5)
b) on each of these sheets consisting of mounting panel material (100, 300, 500), the segments (A, B, C,...) are structured in the same way with capacitor covers (1.1, 3.1, 3.6, 5.1), strip conductor(s) (1.7, 3.4, 5.4) and/or metal tracks (1.4, 3.3, 5.3) and metal covers (1.3, 5.2) used as a screen
c) on the panel(s) consisting of interim panel material (200, 400), in order to create a hollow area in each of the segments (A, B, C,...), recesses (2.1, 4.1) are formed accordingly, the border areas of the segments of these sheets which remain from these recesses (2.1, 4.1) being connected using the struts (2.5, 4.5)
d) the mounting and interim panel sheets (100, 200, 300, 400, 500) are bonded together, the feedthroughs (8) are installed and the individual sensor arrangements are then cut free, the individual segments (A, B, C,...) being separated from the struts (1.5, 2.5, 3.5, 4.5, 5.5)

12. A method according to one of the above claims,
**characterised in that** in order to bond the mounting and interim panels, the recesses (2.1, 2.2, 2.3/4.1, 4.3) of the interim panels (2, 4) are occasionally, at least partially, filled according to their thickness (13) and after they have been bonded, the filling is then removed, in order to prevent deformations occurring in the mounting panels near the hollow area during the bonding process.

13. A method according to claim 12, **characterised in that** in order to complete the bonding process, a strip (13) consisting of a stable material, in particular a PTFE strip, with a thickness which corresponds to the thickness of the interim panels (2, 4), is inserted into the central recess (2.1, 4.1) of the interim panels (2, 4), and that after the bonding process, this strip (13) is removed again through one of the recesses (2.2, 4.2) in the interim panels (2, 4).

14. The use of a multiple layer circuit board arrangement for a capacitive sensor arrangement in a fluid or gaseous medium (6),
a.consisting of several mounting panels (1, 3, 5), which are structured with strip conductors (1.7, 3.4, 5.4) and capacitor covers (1.1, 3.1, 3.6, 5.1)
b.whereby between the mounting panels (1, 3, 5), interim panels (2, 4) with are constant thickness are fitted, which are provided with a central recess (2.1, 4.1) in the area in which the adjacent mounting panels (1, 3, 5) comprise the capacitor covers (1.1/3.1 and 3.6/5.1), to form a hollow area
c. furthermore, the mounting panels and/or the interim panels (1, 2, 3, 4, 5) are additionally fitted with recesses (1.6, 2.3, 4.3, 5.6) to allow the medium (6) to flow in and out of the hollow area, and
d. the mounting and interim panels (1.2, 3, 4.5) are electrically connected with each other via metal-coated feedthroughs (8)

## Revendications

1. Dispositif de capteur capacitif pour l'utilisation dans un milieu liquide ou gazeux (6),
a) composé d'au moins deux plaques supports (1, 3, 5) disposées parallèlement à une distance prédéfinie par des moyens d'écartement,
b) des armatures de condensateur (1.1/3.1 et 3.6/5.1) métalliques étant disposées respectivement sur des côtés tournés l'un vers l'autre de deux plaques supports voisines, armatures qui forment par câblage un condensateur qui est rempli au moins partiellement du milieu (6), **caractérisé en ce que**,
c) en tant que moyen d'écartement entre deux plaques supports voisines (1, 3, 5), une plaque intermédiaire (2, 4) d'épaisseur constante est disposée respectivement, dont les dimensions extérieures correspondent essentiellement à celles des plaques supports et **en ce que**, à chaque fois, la plaque intermédiaire (2, 4), dans la zone dans laquelle les plaques supports (1, 3, 5) voisines présentent les armatures de condensateurs (1.1/3.1 et 3.6/5.1), est munie d'un évidement médian (2.1, 4.1) pour la production d'une cavité, et
d) en outre, plusieurs évidements (1.6, 2.2, 2.3, 4.2, 4.3, 5.6) sont prévus respectivement dans les plaques supports et/ou la plaque intermédiaire (1, 2, 3, 4, 5) pour l'entrée et la sortie du milieu (6) dans et hors de la cavité (2.1, 4.1).

2. Dispositif de capteur selon la revendication 1, **caractérisé en ce qu'**il demeure respectivement dans la plaque intermédiaire (2, 4) autour de la cavité (2.1, 4.1) une zone marginale (2.4, 4.4) qui est interrompue par les évidements (2.2, 2.3, 4.2, 4.3) pour l'entrée et la sortie du milieu (6) dans et hors de la cavité (2.1, 4.1), l'extension des évidements (2.2, 2.3, 4.2, 4.3) dans la zone marginale (2.4, 4.4) étant de préférence plus petite que la zone marginale restante de la plaque intermédiaire (2, 4) à travers ces évidements.

3. Dispositif de capteur selon la revendication 1, **caractérisé en ce que** les évidements (1.6, 5.6) pour l'entrée et la sortie du milieu (6) dans et hors de la cavité (2.1, 4.1) sont constitués respectivement au moins partiellement à travers des trous (1.6, 5.6) dans les plaques supports 1, 5).

4. Dispositif de capteur selon une des revendications précédentes, **caractérisé en ce que** des connexions transversales métallisées (8) sont respectivement mises en place à travers les plaques supports (1, 3, 5) ainsi qu'à travers la plaque intermédiaire (2, 4), connexions qui sont raccordées sur les différents côtés des plaques supports (1, 3, 5) via des pistes conductrices (3.4) au moins partiellement à des armatures de condensateur (1.1/3.1 et 3.6/5.1).

5. Dispositif de capteur selon la revendication 4, **caractérisé en ce que**
a1) pour précisément deux plaques supports, sur au moins une de ces deux plaques ou
a2) pour trois plaques supports et plus, sur au moins une plaque support (1) située à l'extérieur,
b) sur le côté éloigné des autres plaques supports (3, 5), des capteurs, des pistes conductrices et un circuit d'analyse (7) sont disposés, le circuit d'analyse (7) étant, via les pistes conductrices (1.7, 3.4, 5.4) et les connexions transversales (8), raccordé aux armatures de condensateur (1.1/3.1 et 3.6/5.1) sur les différentes plaques supports (1,3,5).

6. Dispositif de capteur selon une des revendications précédentes, **caractérisé en ce que** au moins trois plaques supports sont prévues et **en ce que** les armatures de condensateur (3.1, 3.6), disposées des deux côtés d'au moins une plaque support médiane (3), sont toutes deux connectées à un potentiel de tension égal.

7. Dispositif de capteur selon une des revendications précédentes, **caractérisé en ce que** les plaques supports (1, 3, 5) sont munies d'un blindage sous la forme d'une piste métallique (1.4, 3.3, 5.3) entourant au moins partiellement l'armature de condensateur (1.1, 3.1, 3.6, 5.1), mais séparée de l'armature de condensateur, laquelle piste est connectée à un potentiel de référence.

8. Dispositif de capteur selon les revendications 6 et 7, **caractérisé en ce que** les armatures de condensateur (3.1, 3.6) disposées des deux côtés d'une plaque support médiane (3) sont toutes deux connectées au potentiel de référence.

9. Dispositif de capteur selon une des revendications précédentes, **caractérisé en ce que**
a1) pour précisément deux plaques supports, sur celles-ci,
a2) pour trois plaques supports et plus, sur les plaques supports (1, 5) situées à l'extérieur,
b) sur les côtés dirigés à l'opposé de la/des autres plaque(s) support(s), un revêtement métallique (1.3, 5.2) est respectivement disposé, qui est connecté à un potentiel de référence pour le blindage.

10. Procédé de fabrication d'un dispositif de capteur selon une des revendications précédentes, **caractérisé en ce que**, dans la technique des cartes de circuit imprimé à plusieurs niveaux,
a. sur les plaques supports (1, 3, 5), des armatures de condensateur (1.1 /3.1 et 3.6/5.1), des pistes conductrices (1.7, 3.4, 5.4) et/ou des pistes métalliques (1.4, 3.3, 5.3) servant de blindage et des revêtements métalliques (1.3, 5.2) sont mis en place et structurés en commun par revêtement métallique et structuration par gravure,
b. des plaques supports et des plaques intermédiaires sont raccordées mécaniquement par de la colle entre elles au moins localement, les plaques intermédiaires présentant une épaisseur constante,
c. à travers les plaques supports (1, 3, 5) ainsi qu'à travers les plaques intermédiaires (2, 4) munies des évidements, des connexions transversales métallisées (8) sont mises en place qui sont raccordées électriquement au moins partiellement avec les armatures de condensateur (1.1/3.1 et 3.6/5.1), les pistes conductrices (1.7, 3.4, 5.4) et/ou les pistes métalliques (1.4, 3.3, 5.3) servant de blindage et les revêtements métalliques (1.3, 5.2).

11. Procédé selon la revendication 10, **caractérisé en ce qu'**un certain nombre de dispositifs de capteur sont fabriqués simultanément, par le fait que
a) des panneaux (100, 200, 300, 400, 500) en matériau de plaques supports et de plaques intermédiaires sont divisés en segments (A, B, C,...) en nombre correspondant au nombre de dispositifs de capteur, les segments (A, B, C,...) formant, distants les uns des autres, les plaques supports et plaques intermédiaires (1, 2, 3, 4, 5) et les différents segments étant raccordés sur le bord de chaque segment via des entretoises (1.5, 2.5, 3.5, 4.5, 5.5),
b) sur chacun de ces panneaux en matériau de plaques supports (100, 300, 500), les segments (A, B, C, ...) sont structurés de façon identique avec les armatures de condensateur (1.1, 3.1, 3.6, 5.1), la/les pistes conductrices (1.7, 3.4, 5.4) et/ou les pistes métalliques (1.4, 3.3, 5.3) servant de blindage et les revêtements métalliques (1.3, 5.2),
c) des évidements (2.1, 4.1) correspondants sont réalisés à partir du/des panneau/panneaux en matériau de plaques intermédiaires (200, 400) pour la production respectivement d'une cavité dans les segments (A, B, C,...), les zones marginales des segments de ces panneaux qui restent après les évidements (2.1, 4.1) sont raccordées par les entretoises (2.5, 4.5)
d) les panneaux des plaques supports et plaques intermédiaires (100, 200, 300, 400, 500) sont collés les uns aux autres, les connexions transversales (8) sont mises en place et ensuite les différents dispositifs de capteur sont libérés par découpage, les différents segments (A, B, C, ...) étant séparés des entretoises (1.5, 2.5, 3.5, 4.5, 5.5).

12. Procédé selon une des revendications précédentes, **caractérisé en ce que**, pour le collage des plaques supports et plaques intermédiaires, les évidements (2.1, 2.2, 2.3/4.1, 4.3) des plaques intermédiaires (2.4) sont temporairement remplis au moins partiellement en fonction de leur épaisseur (13) et puis, après le collage,le remplissage est de nouveau enlevé afin d'éviter des déformations des plaques supports dans la zone de la cavité pendant le collage.

13. Procédé selon la revendication 12, **caractérisé en ce que,** pour le collage, une bande (13) de matériau indéformable, en particulier une bande en PTFE, d'une épaisseur correspondant à l'épaisseur des plaques intermédiaires (2,4), est insérée dans l'évidement médian (2.1, 4.1) des plaques intermédiaires (2.4) et, après le collage, cette bande (13) est de nouveau enlevée à travers un des évidements (2.2, 4.2) des plaques intermédiaires (2.4).

14. Utilisation d'un dispositif de cartes de circuit imprimé à plusieurs niveaux pour un dispositif de capteur capacitif dans un milieu (6) liquide ou gazeux,
a. composé d'une pluralité de plaques supports (1, 3, 5) qui sont structurées avec des pistes conductrices (1.7, 3.4, 5.4) et des armatures de condensateur (1.1, 3.1, 3.6, 5.1),
b. des plaques intermédiaires (2, 4) d'épaisseur constante étant prévues entre les plaques supports (1, 3, 5), et qui, dans la zone dans laquelle les plaques supports (1, 3, 5) voisines présentent les armatures de condensateur (1.1/3.1 et 3.6/5.1), sont munies d'un évidement médian (2.1, 4.1) pour la formation d'une cavité,
c. en outre, les plaques supports et/ou les plaques intermédiaires (1, 2, 3, 4, 5) sont munies en plus d'évidements (1.6, 2.3, 4.3, 5.6) pour l'entrée et la sortie du milieu (6) dans et hors de la cavité, et
d. les plaques supports et plaques intermédiaires (1, 2, 3, 4, 5) sont raccordées électriquement entre elles par des connexions transversales métallisées (8).
